**Europäisches Patentamt**

**European Patent Office**

**Office européen des brevets**

(11) Veröffentlichungsnummer: **0 293 746**
**B1**

(12) **EUROPÄISCHE PATENTSCHRIFT**

(45) Veröffentlichungstag der Patentschrift:
**22.11.90**

(21) Anmeldenummer: **88108363.8**

(22) Anmeldetag: **26.05.88**

(51) Int. Cl.⁵: **C09C 1/40,** C09C 1/24,
C09C 1/00

(54) Plättchenförmiges Zweiphasenpigment.

(30) Priorität: **02.06.87 DE 3718446**
**13.06.87 DE 3719804**

(43) Veröffentlichungstag der Anmeldung:
**07.12.88 Patentblatt 88/49**

(45) Bekanntmachung des Hinweises auf die Patenterteilung:
**22.11.90 Patentblatt 90/47**

(84) Benannte Vertragsstaaten:
**DE ES FR GB IT NL**

(56) Entgegenhaltungen:
**EP-A- 0 014 382**
**EP-A- 0 068 311**
**EP-A- 0 268 072**

**NEUMULLER O.A., ROMPPS CHEMIE LEXIKON,**
**Band 5, 8. Auflage, 1987, Franckh'sche**
**Verlagshandlung, Suttgart, DE**

(73) Patentinhaber: **BASF Aktiengesellschaft,**
**Carl-Bosch-Strasse 38, D-6700 Ludwigshafen(DE)**

(72) Erfinder: **Ostertag, Werner, Dr., Oberer-Bergel-Weg 2,**
**D-6718 Gruenstadt(DE)**

ACTORUM AG

## Beschreibung

Die vorliegende Erfindung betrifft Effektpigmente, die aus zwei strukturell unterschiedlichen Phasen bestehen und durch Reduktion von hydrothermal hergestellten plättchenförmigen $Al_xFe_{2-x}O_3$-Pigmenten, wie sie in EP 68 311 beschrieben sind, hergestellt werden.

Die optische Wirkung von Effektpigmenten beruht auf gerichteter Reflexion an flächig ausgebildeten, ausgerichteten, stark lichtbrechenden Pigmentpartikeln. Effektpigmente auf oxidischer Basis finden sowohl im Lack-, Kunststoff-, Druck- und Keramiksektor als auch im kosmetischen Bereich Anwendung.

Neben hellen Effektpigmenten sind besonders auch dunkle Effektpigmente, d.h. Effektpigmente, die sich durch hohen Glanz und hohe Absorption auszeichnen, von Interesse. Dies gilt vor allem für Anwendungen im Automobilbereich und in der Kosmetik, wo durch Überfärbung von höherabsorbierenden Effektpigmenten mit Farbpigmenten oder weiteren helleren Effektpigmenten besonders akktraktive optische Eindrücke erzeugt werden können. Insofern sind alle möglichen Farbtonvarianten der höherabsorbierenden Effektpigmente interessant, da diese immer neue charakteristische Erscheinungsbilder von Lackierungen oder Kosmetikpräparaten ermöglichen.

Es hat nicht an Versuchen gefehlt, dunkel getönte bis schwarze Effektpigmente herzustellen. So werden in DE-C 2 313 331 mit polykristallinen Magnetitschichten belegte Glimmerschuppenpigmente beschrieben, die je nach Beschichtungsdicke "mausgrau" bis schwarz aussehen. Aufgrund des polykristallinen Aufbaus der Pigmente, insbesondere der Beschichtung, zeigen solche Effektpigmente jedoch nicht den Glanz, die mechanische Stabilität und die Oberflächeneigenschaften von hydrothermal synthetisierten plättchenförmigen Pigmenten, bei denen glatte Kristallflächen der im wesentlichen einkristallinen Partikel vorliegen.

Analoges gilt für die in der DE-A 3 433 657 beschriebenen mit einer reduzierten $TiO_2$-Schicht belegten Glimmerschuppenpigmente.

In EP-C 14 382 und DE-A 3 440 911 werden Produkte mit der Struktur des Magnetits und Maghemits erwähnt, die sich aus hydrothermal synthetisierten, mit bestimmten Elementen dotiertem Hematit herstellen lassen. Allerdings sind diese farblich und vom Glanz her nicht näher beschriebenen Produkte bei vollständiger Umwandlung des Kristallgitters zumeist brüchig und entbehren der mechanischen Stabilität der Ausgangspigmente.

Aufgabe der vorliegenden Erfindung war es, von den hellen, kupferfarben glänzenden aluminiumhaltigen Eisenoxidplättchen vom Typ $Al_xFe_{2-x}O_3$ ausgehend, wie sie in der EP-C 68 311 und der US-C 4 373 963 beschrieben sind, eine Vielfalt von koloristisch dunkleren Farbtönen bis hin zu Schwarz einzustellen. Die Pigmente sollten dabei ihre mechanische Stabilität bewahren, d.h. beim Anreiben in Lack, Kunststoff oder anderen Binde- oder Hilfsmitteln nicht zerbrechen. Außerdem sollten sie ihren Glanz bewahren. Die farblichen Varianten sollten sich in gut reproduzierbarer Weise einstellen lassen.

Es wurde gefunden, daß diese Aufgabe bei einem plättchenförmigen Zweiphasenpigment auf der Basis von aluminiumhaltigen Eisenoxiden dadurch gelöst werden kann, daß das Pigment aus einem Kern mit Hematitstruktur der Zusammensetzung $Al_xFe_{2-x}O_3$, worin x einen Wert von 0,02 bis 0,5 hat, besteht und daß die äußere Schicht des Pigmentes Spinellstruktur mit der Zusammensetzung $Al_yFe_{3-y}O_{4+z}$ besitzt, worin y Werte von 0,03 bis 0,75 und z Werte von 0 bis 0,5, vorzugsweise einen Wert von 0,06 bis 0,45 hat.

Die erfindungsgemäßen Pigmente lassen sich durch eine hydrothermale Behandlung der bekannten $Al_xFe_{2-x}O_3$-Pigmente in Gegenwart eines in der wäßrigen Phase gelösten Reduktionsmittels herstellen. Hierbei wird unter Erhaltung von Form und Größe der eingesetzten $Al_xFe_{2-x}O_3$-Partikel die Oberfläche reduziert, während der Kern durch die sich bildende Hülle geschützt wird und unverändert bleibt. Auf diese Weise entsteht ein Zweiphasenpigment mit einem Kern der Zusammensetzung $Al_xFe_{2-x}O_3$ (x = 0,02 bis 0,5) mit Hematitstruktur, während die Oberfläche des Pigmentes Spinellstruktur besitzt und die Zusammensetzung $Al_yFe_{3-y}O_{4+z}$ (z = 0 bis 0,5 und y = 0,3 bis 0,75) aufweist.

Je nach dem Ausmaß der Reduktion lassen sich aus den Ausgangspigmenten neue Pigmente in einer großen Zahl von Farbnuancen herstellen, die von glänzend kupferfarbenen Farbtönen des Ausgangspigments bis zu einem glänzenden Schwarz reichen.

Als Reduktionsmittel kommen grundsätzlich alle in Wasser löslichen reduzierenden Substanzen in Frage. Besonders geeignet sind anorganische Verbindungen, wie Hydrazin und Alkalidithionite.

Die Reduktion wird in wäßriger Lösung hydrothermal durchgeführt, d.h. bei Temperaturen von über 100°C. Um eine rasche Umsetzung zu erzielen, ist es zweckmäßig, bei Temperaturen von 150 bis 350°C zu arbeiten. Der pH-Wert der Lösung liegt vorteilhafterweise oberhalb von 9. Falls im alkalischen Bereich gearbeitet wird, ist es zweckmäßig die hydrothermale Behandlung der Suspension in Gegenwart von in der wäßrigen Phase gelösten Alkalialuminaten, insbesondere Natriumaluminat, durchzuführen, zweckmäßig in jenen Konzentrationen, die als Überschuß bei der Synthese des $Al_xFe_{2-x}O_3$-Ausgangsproduktes zugegen waren. Damit wird mit Sicherheit verhindert, daß aus dem zu behandelnden $Al_xFe_{2-x}O_3$-Pigment Aluminium herausgelöst wird.

Bei dieser schonenden Reduktion wird $Al_xFe_{2-x}O_3$ zunächst von der Oberfläche her reduziert, wobei die Reduktion bis zum Erreichen der Zusammensetzung $Al_yFe_{(3-y)}O_{4,06}$ bis $Al_yFe_{(3-y)}O_{4,15}$ mit dem Gitter des Spinells erfolgt. Bei steigenden Umsetzungszeiten wird das $Al_xFe_{2-x}O_3$ in zunehmend tieferen Schichten reduziert, wobei die Reduktion abgebrochen wird, bevor das gesamte Pigment durchreduziert ist, d.h., daß ein Kern aus $Al_xFe_{2-x}O_3$ erhalten bleibt. Die Reduktion wird zweckmäßig abgebrochen, wenn im reduzierten Pigment ein Gewichtsverhältnis Hematit zu Spinell von 99,5 bis 0,7 vorliegt. Durch die schonende hydrothermale Reduktion ist eine ausgezeichnete Kontrolle des Reduktionsgrades des Ausgangspigmentes über die Parameter, wie Temperatur, Zeit, Art des Reduktionsmittels und pH-Wert der Suspension und damit eine gezielte Einstellung des jeweils gewünschten Farbtones möglich. In Abhängigkeit von dem bei der Hydrothermal-Reduktion erzielten Reduktionsgrad entstehen aus den hellen kupferfarbenen Ausgangspigmenten glänzende Zweiphasenpigmente, deren Farbton von hellbraun über dunkelbraun bis schwarz führt. Nach der hydrothermalen Behandlung wird die Suspension gekühlt, die Pigmente filtriert, gewaschen und getrocknet.

Bei der beschriebenen hydrothermalen Behandlung wird das $Al_xFe_{2-x}O_3$-Pigment in der Regel soweit anreduziert, daß an der Oberfläche eine Zusammensetzung von $Al_yFe_{3-y}O_{4+z}$ mit Werten von z von 0 bzw. 0,06 bis 0,15 erzielt wird. Zusammensetzungen mit Werten von z von 0,15 bis 0,5 sind auf diesem Wege nur schwierig zu erreichen. Zusammensetzungen mit diesen z-Werten sind dagegen leicht zu erreichen, wenn man das $Al_xFe_{2-x}O_3$-Pigment hydrothermal wie beschrieben bis zu $Al_yFe_{3-y}O_{4+z}$ mit z-Werten von 0 bzw. 0,06 bis 0,15 reduziert und das erhaltene zweiphasige Pigment unter schonenden Bedingungen wieder oxidiert. Auf diese Weise können z-Werte von 0,15 bis 0,45 erreicht werden. Diese schonende Oxidation kann z.B. bei Temperaturen von 150 bis 350°C mit mit Stickstoff verdünnter Luft, z.B. mit einem Volumenverhältnis $O_2 : N_2$ von 0,01 bis 0,1, durchgeführt werden. Bei dieser schonenden Reoxidation bleibt die Spinellstruktur der äußeren Pigmenthülle erhalten in Analogie zu der bekannten Oxidation von Magnetit zu Maghemit. Durch diese oxidative Behandlung wird die Farbe der anreduzierten Ausgangspigmente wieder "aufgehellt" und kann z.B. ausgehend von schwarzen Ausgangspigmenten über schwarzbraun, braun bis nach gelbbraun verschoben werden.

Die erfindungsgemäßen Zweiphasenpigmente lassen sich auch dadurch herstellen, daß man eine wäßrige Suspension von plättchenförmigen $Al_xFe_{2-x}O_3$-Pigmenten in Gegenwart von Eisen(II)-verbindungen bei Temperaturen oberhalb von 100°C hydrothermal behandelt, anschließend filtriert, wäscht und trocknet.

Im Gegensatz zu der oben beschriebenen Verfahrensweise, bei der die plättchenförmigen $Al_xFe_{2-x}O_3$-Pigmente in Gegenwart eines Reduktionsmittels wie Hydrazin oder Alkalidithionit behandelt werden, wird hierbei den plättchenförmigen $Al_xFe_{2-x}O_3$-Pigmenten kein Sauerstoff entzogen. Vielmehr diffundieren über die Oberfläche der $Al_xFe_{2-x}O_3$-Plättchen $Fe^{2+}$Ionen in den Pigmentfestkörper ein und führen in der äußeren Schicht zu einer Umwandlung der Hematitstruktur in eine Spinellstruktur. Gleichzeitig vollzieht sich die stoffliche Veränderung zu $Al_yFe_{3-y}O_{4-z}$.

Die Dicke der dunkel gefärbten äußeren Schicht des Zweiphasenpigments nimmt mit steigender Konzentration an angebotenem zweiwertigem Eisen zu. Allerdings ist die Umsetzung nur im alkalischen Bereich quantitativ. Im Sauren verläuft die Reaktion unvollständig, d.h. der größte Teil des angebotenen zweiwertigen Eisens verbleibt in Lösung. Es ist daher zweckmäßig, die Herstellung der Zweiphasenpigmente in alkalischem Bereich vorzunehmen, vorzugsweise bei pH-Werten von 8 bis 13.

Bei der Herstellung der erfindungsgemäßen Zweiphasenpigmente wird im einzelnen so vorgegangen, daß man eine oder mehrere gelöste Eisen(II)-verbindungen, z.B. Eisen(II)-salze, insbesondere Eisen(II)-sulfat, unter Rühren zu dem in wäßriger Lösung suspendierten $Al_xFe_{2-x}O_3$-Pigment gibt oder in der Lösung der Eisen(II)-verbindung die plättchenförmigen Pigmente $Al_xFe_{2-x}O_3$ suspendiert, die Suspension gegebenenfalls mit Alkali, neutral oder basisch stellt und anschließend einer hydrothermalen Behandlung bei Temperaturen über 100°C, zweckmäßigerweise bei 150 bis 360°C unterzieht. Besonders wirtschaftlich ist eine Verfahrensweise, bei der die wäßrige Eisen(II)-lösung unmittelbar nach der Synthese des plättchenförmigen $Al_xFe_{2-x}O_3$-Ausgangspigments in die noch heiße alkalische Pigmentsuspension gepumpt wird.

Selbstverständlich ist man bezüglich der Partikelform und Größe bei der Herstellung der Zweiphasenpigmente vom Ausgangspigment $Al_xFe_{2-x}O_3$ abhängig. Das gilt auch für den Farbton des Pigmentkerns, der nicht zuletzt vom Al-Gehalt der plättchenförmigen $Al_xFe_{2-x}O_3$-Partikel bestimmt ist. Der y-Wert der aus der $Al_xFe_{2-x}O_3$-Zusammensetzung durch Reduktion hervorgegangenen Spinellphase $Al_yFe_{3-y}O_{4+z}$ ergibt sich zwangsläufig und errechnet sich mit y = 0,03 bis 0,75.

Die erfindungsgemäßen Pigmente sind vor allem wegen ihrer optischen Eigenschaften interessant und können zur Pigmentierung von Anstrichen, Lacken, Kunststoffen, Druckfarben, keramischen Oberflächen, Gläsern und von kosmetischen Produkten verwendet werden.

Die erfindungsgemäßen Pigmente sind jedoch nicht nur wegen ihrer optischen Eigenschaften interessant. Sie zeigen auch elektrische und magnetische Eigenschaften, die ihnen in anderen technischen Bereichen, wie der elektromagnetischen Abschirmung Anwendungsmöglichkeiten eröffnen.

Die erfindungsgemäßen Pigmente können auch mit hochbrechenden Oxiden, wie $TiO_2$ oder $Fe_2O_3$ beschichtet werden, wodurch sich weitere koloristisch interessante Effektpigmente herstellen lassen.

Beispiel 1

A) Herstellung des Ausgangsproduktes (gemäß EP 68 311) Eine gut gerührte wäßrige Suspension mit 59 g/l FeOOH (BET-Oberfläche 42 m²/g), 42 g/l NaOH und 32 g/l $\gamma$-Al$_2$O$_3$ wird in einem Rohrreaktor mit einem Durchsatz von 42 kg/h in 30 min auf 303°C erhitzt, bei dieser Temperatur über 10 min belassen und dann abgekühlt, filtriert, gewaschen und bei 110°C getrocknet.

Das Produkt ist glänzend bräunlich rot und zeigt im Rasterelektronenmikroskop plättchenförmige Partikel. Die mittlere Partikelgröße wird mit dem Cilas-Granulometer mit 7,9 µ bestimmt. Die spezifische Oberfläche (BET) beträgt 8,3 m²/g. Die chemische Analyse ergibt 4,5 Gew.-% Al und 62,5 Gew.-% Fe in der Oxidationsstufe III. Hieraus errechnet sich eine Zusammensetzung entsprechend von Al$_{0,26}$Fe$_{1,74}$O$_3$.

B) 10 g des in Beispiel 1A hergestellten Produktes werden in 140 g destilliertem Wasser suspendiert und mit 10 g Hydraziniumhydroxid (N$_2$H$_4$.H$_2$O) unter Rühren versetzt. Die Mischung wird in einem 300 ml Rührautoklaven in 60 min auf 313°C hochgeheizt, danach wird abgekühlt. Das Produkt wird filtriert gewaschen und bei 110°C getrocknet.

Das erhaltene Produkt ist tiefbraun gefärbt und glänzt. Rasterelektronenmikroskopische Aufnahmen zeigen, daß das Produkt einheitlich ist und daß die Hydrothermalbehandlung mit Hydrazin zu keiner Veränderung des Plättchencharakters und der mittleren Partikelgröße geführt hat. Röngtenuntersuchungen lassen neben der Struktur des Hematits die des Spinells erkennen. Über eine Eichkurve wird das Gewichtsverhältnis Hematit:Spinell mit 72:28 ermittelt. Die chemische Analyse ergibt die Werte Al = 4,6 Gew.-%, Fe$^{2+}$ 6,5 Gew.-%, Fe$_{gesamt}$ = 63,2 Gew.-%.

Beispiele 2 bis 5

Die Beispiele werden analog Beispiel 1 mit wechselnden Mengen Hydrazin durchgeführt. In Beispiel 5 wird die Suspension noch mit NaOH versetzt.

| | Einwaage in g | | | | | Charakterisierung | | |
|---|---|---|---|---|---|---|---|---|
| Bsp. | Al$_x$Fe$_{2-x}$O$_3$ | H$_2$O | N$_2$H$_4$.H$_2$O | NaOH | pH-Wert | Farbe | Fe$^{2+}$ (Gew.%) | Gew.verhältnis Hematit:Spinell |
| 2 | 10 | 140 | 2,5 | - | 7 | braun-rot | 0,2 | > 99 |
| 3 | 10 | 140 | 5,0 | - | 7 | rötlich braun | 1,0 | 96 : 4 (24,0) |
| 4 | 10 | 140 | 7,5 | - | 7 | hell-braun | 3,5 | 85 : 15 (5,67) |
| 5 | 10 | 140 | 5,0 | 1 g | | schwarz | 14,5 | 43 : 57 (0,75) |

Beispiel 6

10 g plättchenförmiges Eisenoxid (62,5 Gew.-% Fe, 4,5 Gew.% Al → Al$_{0,26}$Fe$_{1,74}$O$_3$, BET = 8,3 m²/g, mittlere Teilchengröße = 6,8 µm) werden mit 140 ml Wasser, 10 g 50gew.-%iger NaOH und 2 g Natriumaluminat (37,3 Gew.-% Na$_2$O, 44 Gew.-% Al$_2$O$_3$) und 2,5 g Natriumdithionit intensiv verrührt.

Diese Suspension wird im 300 ml-Autoklaven unter Rühren in 30 min auf 220°C, dann in weiteren 30 Minuten auf 315°C weitergeheizt. Danach wird abgekühlt und der Autklav entleert. Das Produkt wird abgesaugt, neutral gewaschen und bei 100°C im Umluftschrank getrocknet.

Das Produkt ist dunkelviolett gefärbt und glänzt. Röntgenuntersuchungen zeigen das Gitter von Hämatit und Magnetit. Rasterelektronenmikroskopische Aufnahmen lassen erkennen, daß das Produkt plättchenförmig ist.

Die chemische Untersuchung regibt einen Gehalt von 9,8 Gew.% Fe(II) (Anteil Spinell: 39%, Anteil Hämatit: 61%).

Beispiel 7 (Vergleichsbeispiel)

Herstellung eines vollständig reduzierten einphasigen Pigmentes.

10 g des in Beispiel 1A hergestellten Produktes werden mit 140 g $H_2O$, 12 g 50gew.-%iger Natronlauge (37 Gew.-% $Na_2O$, 44 Gew.-% $Al_2O_3$) und 109 g Hydraziniumhydrat versetzt. Die Suspension wird im Rührautoklaven in 60 min auf 310°C erhitzt. Danach wird abgekühlt, filtriert, gewaschen und unter $N_2$ getrocknet.

Das Produkt ist schwarz und kristallisiert einphasig im Spinellgitter. Rasterelektronenmikroskopische Untersuchungen zeigen, daß das Produkt kaum noch plättchenförmig ist, sondern in zahlreiche Partikel zerbrochen ist. Die chemische Analyse ergibt $Fe^{2+}$ = 20,4 Gew.-%, Al = 3,0 Gew.-%, $Fe_{gesamt}$ = 60,4 Gew.-%. Daraus errechnet sich die Zusammensetzung $Al_{0,27}Fe_{2,61}O_{3,89}$. Röntgenographische Untersuchungen lassen erkennen, daß das Pigment keine Hematitphase mehr aufweist.

Beispiel 8

Das in Beispiel 5 hergestellte Produkt wird bei 250°C im Drehrohrofen 30 min lang mit einem Gasstrom, der 90 Vol.-% $N_2$ und 10 Vol.-% Luft enthält, behandelt, danach wird unter $N_2$ abgekühlt. Das Produkt ist schwarzbraun. Die Analyse zeigt, daß der $Fe^{2+}$-Gehalt bei 11 Gew.-% liegt. Röntgenuntersuchungen ergeben ein Gewichtsverhältnis der Hematit- und Spinellphase wie beim Ausgangsprodukt, d.h. 43:57 = 0,75.

Beispiele 9 und 10

Diese Beispiele werden in Analogie zu 8 durchgeführt, wobei die Oxidationsdauer länger gewählt wird.

| Bsp. | Oxidationsdauer | $Fe^{2+}$-Gehalt (Gew.%) | Farbe | Hematit/Spinell (Gew.verhältnis) |
|---|---|---|---|---|
| 11 | 60 min | 7,5 | braun | ändert sich nicht |
| 12 | 90 min | 4,0 | gelbbraun | |

Beispiel 13

30 g des in Beispiel 1B hergestellten Pigmentes werden in 103,8 g wäßriger Titanylsulfatlösung, welche 5,2 Gew.-% Titan und 49,7 Gew.-% $H_2SO_4$ enthält, eingetragen. Die Suspension wird bei Raumtemperatur tropfenweise mit einer Sodalösung, bestehend aus 23,34 g $Na_2CO_3$ und 500 ml $H_2O$ versetzt. Unter Rühren wird bis zum Siedepunkt erhitzt und anschließend 2 Stunden lang gekocht. Danach werden 500 ml 95°C heißes Wasser über die Dauer von 1 Stunde zugegeben und weiterhin 1 Stunde lang bis zum Siedepunkt erhitzt. Anschließend wird abgekühlt. Die mit ausgefallenem Titanoxidhydrat belegten Pigmentplättchen werden abfiltriert, gewaschen und bei 120°C getrocknet.

Das entstandene Produkt hat violette Farbe, glänzt und zeigt in der Analyse einen Titangehalt von 11,9 Gew.-%.

Beispiel 14

10 g des in Beispiel 1A hergestellten plättchenförmigen Eisenoxides werden mit 70 ml destilliertem Wasser, der Lösung von 3,22 g Eisen(II)-sulfat-hydrat (Eisengehalt 19,8 Gew.-%) in 70 ml $H_2O$ und 1,85 g 50 gew.-%iger NaOH-Lösung verrührt (pH 11,2) und in einem 300 ml fassenden Rührautoklaven in 30 min auf 225°C und in weiteren 30 min auf 320°C erhitzt. Danach wird abgekühlt, filtriert, NaOH-frei gewaschen und getrocknet.

Das Produkt ist glänzend braun. Rasterelektronenmikroskopische Aufnahmen zeigen, daß es einheitlich plättchenförmig ist. Cilasgranulometrische Bestimmungen ergeben einen mittleren Wert für die mittlere maximale Partikelgröße von 7,85 μ. Röntgendiagramme weisen die Linien von Hematit und von Magnetit auf. Die naßchemische Analyse ergibt Fe gesamt: 64,3% und $Fe^{2+}$: 4,8 Gew.-%.

Das daraus errechnete Verhältnis Hematit:Spinell ist in Tabelle 1 wiedergegeben.

Beispiel 15

10 g des in Beispiel 1A hergestellten plättchenförmigen $Al_{0,26}Fe_{1,74}O_3$-Pigmentes werden mit 140 ml destilliertem Wasser, in dem 6,44 g $FeSO_4.nH_2$ (Fe-Gehalt 19,8 Gew.-%) gelöst sind und 3,71 g 50 gew.-%iger NaOH innig vermischt (pH 11,5) und in einem 300 ml fassenden Rührautoklaven in 30 min auf 220°C und in weiteren 30 min auf 315°C erhitzt, danach wird abgekühlt, filtriert, mit Wasser alkalifrei gewaschen und bei 110°C getrocknet.

Das Pigment hat einen schwarzbraunen Farbton und glänzt. Rasterelektronenmikroskopische Aufnahmen zeigen, daß das Produkt einheitlich plättchenförmig vorliegt. Cilasgranulometrische Bestimmungen ergeben einen mittleren Wert für die mittlere maximale Partikelgröße von 7,9 μ. Röntgendiagramme weisen die Linien von Hematit und von Magnetit auf. Die chemische Analyse ergibt Fe gesamt: 65 Gew.-% und $Fe^{2+}$: 8,8 Gew.-%. Das errechnete Verhältnis Hematit:Spinell ist in Tabelle 1 wiedergegeben.

Beispiel 16

10 g des in Beispiel 1A hergestellten plättchenförmigen Pigments werden mit 140 ml destilliertem Wasser, 1,61 g Eisen(II)-sulfat-hydrat (Eisengehalt 19,8 Gew.) und 0,93 g 50 %iger wäßriger NaOH-Lösung verrührt (pH-Wert der Lösung: 11,2) und in einem 300 ml fassenden Rührautoklaven in 30 min auf 215°C und in weiteren 30 min auf 310°C erhitzt. Danach wird abgekühlt, filtriert, gewaschen und bei 110°C getrocknet.

Das Pigment ist braunrot und glänzt. Rasterelektronenmikroskopische Untersuchungen zeigen, daß das Produkt einheitlich plättchenförmig ist. Es hat eine mittlere maximale Partikelgröße von 7,9 μ.

Röntgendiagramme weisen die Linien von Hematit und Magnetit auf. Die chemische Analyse ergibt Fe gesamt: 63,7 % und $Fe^{2+}$: 2,1 %.

Das errechnete Verhältnis Magnetit:Spinell ist in Tabelle 1 wiedergegeben.

Beispiel 17

10 g des in Beispiel 1A hergestellten plättchenförmigen Pigmente, 1,07 g Eisen (II)-sulfathydrat (Fe-Gehalt 19,8 Gew.-%), 0,31 g NaOH und 141 g $H_2O$ werden gut durchmischt (pH-Wert der Mischung 11,0) und dann in einem 300 ml Rührautoklaven in 30 min bei 210 und in weiteren 30 min auf 325°C erhitzt. Danach wird abgekühlt, filtriert, gewaschen und bei 110°C getrocknet.

Das Produkt ist glänzend bräunlichrot, etwas dunkler als das Ausgangsprodukt. Die chemische Analyse ergibt Fe gesamt: 63,3 % und $Fe^{2+}$: 1,4 %.

**Tabelle 1**

| Beispiel | $FeSO_4.nH_2O$ Einwaage* | Farbe des Produktes | Hematit:Magnetit Verhältnis in Gew.% |
|----------|--------------------------|---------------------|--------------------------------------|
| 17 | 1,07 | bräunlichrot | 94,5 : 5,5 |
| 16 | 1,61 | braunrot | 91,7 : 8,3 |
| 14 | 3,22 | braun | 81 : 19 |
| 15 | 6,44 | schwarzbraun | 65 : 35 |

\* bezogen auf 100 ml Wasser

Patentansprüche

1. Plättchenförmiges Zweiphasenpigment auf der Basis von aluminiumhaltigen Eisenoxiden, dadurch gekennzeichnet, daß es aus einem Kern mit Hematitstruktur der Zusammensetzung

$Al_xFe_{2-x}O_3$,

worin x einen Wert von 0,02 bis 0,5 hat, besteht und daß die äußere Schicht Spinellstruktur mit der Zusammensetzung

$Al_yFe_{3-y}O_{4+z}$

besitzt, worin y Werte von 0,03 bis 0,75 und Z Werte von 0 bis 0,5 hat.

2. Plättchenförmiges Zweiphasenpigment nach Anspruch 1, dadurch gekennzeichnet, daß z einen Wert von 0,06 bis 0,45 hat.

3. Plättchenförmiges Zweiphasenpigment nach Ansprüchen 1 und 2, dadurch gekennzeichnet, daß das Gewichtsverhältnis Hematit zu Spinell 99,5 bis 0,7 beträgt.

4. Verfahren zur Herstellung der Zweiphasenpigmente nach Ansprüchen 1 bis 3, dadurch gekennzeichnet, daß man eine wäßrige Suspension von plättchenförmigen $Al_xFe_{2-x}O_3$-Pigmenten in Gegenwart eines in Wasser löslichen Reduktionsmittels bei Temperaturen oberhalb von 100°C hydrothermal behandelt, anschließend filtriert, wäscht und trocknet.

5. Verfahren nach Anspruch 4, dadurch gekennzeichnet, daß man die hydrothermale Behandlung bei Temperaturen von 150 bis 360°C vornimmt.

6. Verfahren nach Ansprüchen 4 und 5, dadurch gekennzeichnet, daß man als Reduktionsmittel anorganische Verbindungen einsetzt.

7. Verfahren nach Anspruch 6, dadurch gekennzeichnet, daß man als anorganische Reduktionsmittel Hydrazin und/oder Alkalidithionit einsetzt.

8. Verfahren nach Ansprüchen 4 bis 7, dadurch gekennzeichnet, daß die hydrothermale Behandlung bis zu einer Zusammensetzung der äußeren Schicht von $Al_yFe_{3-y}O_{4+z}$ mit Werten von y von 0,03 bis 0,75 und von z von 0,06 bis 0,15 führt und anschließend das so erhaltene Pigment reoxidiert zu Werten von z bis 0,45.

9. Verfahren nach Anspruch 8, dadurch gekennzeichnet, daß man die Reoxidation durch mit Stickstoff verdünnter Luft bei Temperaturen von 150 bis 350°C durchführt.

10. Verfahren nach Anspruch 9, dadurch gekennzeichnet, daß die Luft ein Sauerstoff-Stickstoff-Volumenverhältnis von 0,01 bis 0,1 aufweist.

11. Verfahren zur Herstellung der Zweiphasenpigmente nach Ansprüchen 1 bis 3 dadurch gekennzeichnet, daß man eine wäßrige Suspension von plättchenförmigen $Al_xFe_{2-x}O_3$-Pigmenten in Gegenwart von Eisen(II)-verbindungen bei Temperaturen oberhalb von 100°C hydrothermal behandelt, anschließend filtriert, wäscht und trocknet.

12. Verfahren nach Anspruch 11, dadurch gekennzeichnet, daß man die hydrothermale Behandlung bei Temperaturen von 150 bis 360°C vornimmt.

13. Verfahren nach Anspruch 11 und 12, dadurch gekennzeichnet, daß man die Behandlung bei pH-Werten oberhalb von 7 vornimmt.

14. Verwendung der plättchenförmigen Zweiphasenpigmente nach Ansprüchen 1 bis 3 für die Pigmentierung von Anstrichen, Lacken, Kunststoffen, Druckfarben, keramischen Oberflächen, Gläsern und von kosmetischen Produkten.

15. Verwendung der plättchenförmigen Zweiphasenpigmente nach Ansprüchen 1 bis 3 zur Herstellung von magnetischen Abschirmungen.


**Claims**

1. A plateletlike two-phase pigment based on aluminum-containing iron oxides, which has a core with a hematite structure of the composition

$Al_xFe_{2-x}O_3$

where x is from 0.02 to 0.5, and an outer layer with a spinel structure of the composition

$Al_yFe_{3-y}O_{4+z}$

where y is from 0.03 to 0.75 and z is from 0 to 0.5.

2. A plateletlike two-phase pigment as claimed in claim 1, wherein z is from 0.06 to 0.45.

3. A platelet-like two-phase pigment as claimed in claim 1 or 2, wherein the weight ratio of hematite:spinel is from 99.5 to 0.7.

4. A process for preparing a two-phase pigment as claimed in any of claims 1 to 3, which comprises subjecting an aqueous suspension of a plateletlike $Al_xFe_{2-x}O_3$ pigment to a hydrothermal treatment at above 100°C in the presence of a water-soluble reducing agent and then filtering, washing and drying.

5. A process as claimed in claim 4, wherein the hydrothermal treatment is carried out at from 150 to 360°C.

6. A process as claimed in claim 4 or 5, wherein the reducing agent is an inorganic compound.

7. A process as claimed in claim 6, wherein the inorganic reducing agent is hydrazine or an alkali metal dithionite.

8. A process as claimed in any of claims 4 to 7, wherein the hydrothermal treatment is continued until the outer layer has a composition of $Al_yFe_{3-y}O_{4+z}$ with y from 0.03 to 0.75 and z from 0.06 to 0.15 and the pigment thus obtained is then reoxidized to z values up to 0.45.

9. A process as claimed in claim 8, wherein the reoxidation is carried out with nitrogen-diluted air at from 150 to 350°C.

10. A process as claimed in claim 9, wherein the air has an oxygen:nitrogen volume ratio of from 0.01 to 0.1.

11. A process for preparing a two-phase pigment as claimed in any of claims 1 to 3, which comprises subjecting an aqueous suspension of a plateletlike $Al_xFe_{2-x}O_3$ pigment to a hydrothermal treatment at above 100°C in the presence of an iron(II) compound and then filtering, washing and drying.

12. A process as claimed in claim 11, wherein the hydrothermal treatment is carried out at from 150 to 360°C.

13. A process as claimed in claim 11 or 12, wherein the treatment is carried out at above pH 7.

14. Use of a plateletlike two-phase pigment as claimed in any of claims 1 to 3 for pigmenting paints, coatings, plastics, printing inks, ceramic surfaces, glasses and cosmetic products.

15. Use of a plateletlike two-phase pigment as claimed in any of claims 1 to 3 for manufacturing an electromagnetic screen.

## Revendications

1. Pigment à deux phases en forme de plaquettes base d'oxydes de fer contenant de l'aluminium, caractérisé en ce qu'il se compose d'un noyau avec une structure hématite de constitution

$Al_xFe_{2-x}O_3$

dans laquelle x a une valeur de 0,02 à 0,5 et en ce que la couche externe a une structure spinelle de constitution

$Al_yFe_{3-y}O_{4+z}$

où y a une valeur de 0,03 à 0,75 et z une valeur de 0 à 0,5.

2. Pigment à deux phases en forme de plaquettes selon la revendication 1, caractérisé en ce que z a une valeur de 0,06 à 0,45.

3. Pigment à deux phases en forme de plaquettes selon les revendications 1 et 2, caractérisé en ce que le rapport pondéral de l'hématite au spinelle est compris entre 99,5 et 0,7.

4. Procédé de préparation du pigment à deux phases selon les revendications 1 à 3, caractérisé en ce qu'on traite par voie hydrothermale une suspension aqueuse de pigments $Al_xFe_{2-x}O_3$ en forme de plaquettes en présence d'un réducteur hydrosoluble à des températures supérieures à 100°C, puis on filtre, on lave et on sèche.

5. Procédé selon la revendication 4, caractérisé en ce qu'on effectue le traitement hydrothermal à des températures de 150 à 360°C.

6. Procédé selon les revendications 4 et 5, caractérisé en ce qu'on utilise comme réducteur des composés inorganiques.

7. Procédé selon la revendication 6, caractérisé en ce qu'on utilise comme réducteur inorganique de l'hydrazine et/ou un dithionite alcalin.

8. Procédé selon les revendications 4 à 7, caractérisé en ce qu'on mène le traitement hydrothermal jusqu'à une constitution de la couche externe de $Al_yFe_{3-y}O_{4+z}$ avec des valeurs de y de 0,03 à 0,75 et de z de 0,06 à 0,15 puis on réoxyde le pigment ainsi obtenu à des valeurs de z allant jusqu'à 0,45.

9. Procédé selon la revendication 8, caractérisé en ce qu'on effectue la réoxydation avec de l'air dilué avec de l'azote à des températures de 150 à 350°C.

10. Procédé selon la revendication 9, caractérisé en ce que l'air présente un rapport volumique oxygène-azote de 0,01 à 0,1.

11. Procédé de préparation de pigments à deux phases selon les revendications 1 à 3, caractérisé en ce qu'on traite par voie hydrothermale une suspension aqueuse de pigments $Al_xFe_{2-x}O_3$ en forme de plaquettes en présence de composés de fer-(II) à des températures supérieures à 100°C, puis on filtre, on lave et on sèche.

12. Procédé selon la revendication 11, caractérisé en ce qu'on effectue le traitement hydrothermal à des températures de 150 à 360°C.

13. Procédé selon la revendication 11 ou 12, caractérisé en ce qu'on mène le traitement à des valeurs de pH supérieures à 7.

14. Utilisation des pigments à deux phases en forme de plaquettes selon les revendications 1 à 3, pour la pigmentation de peintures, vernis, matières plastiques, encres d'imprimerie, surfaces céramiques, verres et de produits cosmétiques.

15. Utilisation des pigments à deux phases en forme de plaquettes selon les revendications 1 à 3, pour la préparation d'écrans magnétiques.